# EUROPEAN PATENT SPECIFICATION

(11) **EP 3 339 543 B1**
(45) Date of publication and mention of the grant of the patent: **05.06.2019**
(21) Application number: 17198724.1
(22) Date of filing: 26.10.2017
(51) Int. Cl.: E05B 83/24

(54) **TRACTOR**
TRAKTOR
TRACTEUR

(30) Priority: 20.12.2016 JP 2016246680
(43) Date of publication of application: 27.06.2018
(73) Proprietor: Iseki & Co., Ltd., Matsuyama-shi, Ehime 799-2692 (JP)
(72) Inventor: IMAI, Masanori, Iyo-gun, Ehime 791-2193 (JP); TOMIOKA, Eiji, Iyo-gun, Ehime 791-2193 (JP); KINOSHITA, Satoru, Iyo-gun, Ehime 791-2193 (JP)
(74) Representative: Spengler, Robert

(56) References cited:
- GB-A- 362 126
- JP-A- H05 139 339
- US-A- 1 455 371
- US-A- 1 481 493
- US-A- 1 647 509
- US-A- 1 778 474
- US-A- 1 815 540
- US-A- 1 824 912

## Description

### BACKGROUND OF THE INVENTION

### Field of the Invention

The present invention relates to a tractor such as an agricultural tractor or the like.

Known is a tractor for which an operation to release a lock of the bonnet can be readily performed with a lever (for example, refer to Japanese Patent Application Publication No. Hei 5-139339).

### SUMMARY OF THE INVENTION

However, the present inventors have noticed that, in the above described conventional tractor, danger accompanying an unintentional opening of the bonnet exists.

The present invention furnishes, in consideration of the above described conventional problem, a tractor for which danger accompanying an unintentional opening of the bonnet can be reduced.

The 1^{st} aspect of the present invention is a tractor, comprising:
an openable-and-closable bonnet (70), which covers an engine room (60): and
a bonnet fixer (100) provided in the engine room (60), which has a rotatable lock arm (120) for locking the closed bonnet (70),
a bonnet lock releasing operation rod (200) for performing an operation to release a lock of the closed bonnet (70), one end part (200a) of which is connected with the lock arm (120), and another end part (200b) of which protrudes out of the engine room (60); and
a surrounding member (300) which partly or wholly surrounds the another end part (200b) of the bonnet lock releasing operation rod (200);
**characterized in that**
the another end part (200b) of the bonnet lock releasing operation rod (200) has an engaging part, with which engages a jig (400) for performing an operation to release a lock of the closed bonnet (70), and
the jig (400) is, at a time of use, inserted into the surrounding member (300), and made to engage with the engaging part.

By means of this, since the surrounding member (300) partly or wholly surrounds the another end part (200b) of the bonnet lock releasing operation rod (200), danger accompanying an unintentional opening of the bonnet (70) can be reduced. Furthermore, since the another end part (200b) of the bonnet lock releasing operation rod (200) has an engaging part, an operation to release a lock of the closed bonnet (70) can be readily performed.

The 2^{nd} aspect of the present invention is the tractor according to the 1st aspect of the present invention, wherein
the bonnet fixer (100) is provided standingly from a plate (61).
the bonnet lock releasing operation rod (200) penetrates the plate (61),
the surrounding member (300) is fixed at a lower face of the plate (61), and
when, with the jig (400) which has been inserted into the surrounding member (300) and made to engage with the engaging part, a worker starts an operation to release a lock of the closed bonnet (70), then the another end part (200b) of the bonnet lock releasing operation rod (200) is pulled down.

By means of this, since the bonnet lock releasing operation rod (200) penetrates the plate (61), durability can be improved. Furthermore, since the surrounding member (300) is fixed at a lower face of the plate (61), a simple configuration can be realized.

The 3^{rd} aspect of the present invention is the tractor according to the 1^{st} or 2^{nd} aspect of the present invention, wherein
the engaging part is a jig engaging hole (220), a jig engaging concave-part (230), or a jig engaging notch (240).

By means of this, since the engaging part is a jig engaging hole (220), a jig engaging concave-part (230). or a jig engaging notch (240), a simple configuration can be realized,

The 4^{th} aspect of the present invention is the tractor according to any one of the 1^{st} to 3^{rd} aspect of the present invention, wherein
the another end part (200b) of the bonnet lock releasing operation rod (200) has a contacting part, which a jig (400) for performing an operation to release a lock of the closed bonnet (70) contacts.

By means of this, since the another end part (200b) of the bonnet lock releasing operation rod (200) has a contacting part, an operation to release a lock of the closed bonnet (70) can be readily performed.

The 5^{th} aspect of the present invention is the tractor according to any one of the 1^{st} to 4^{th} aspects of the present invention, wherein
the surrounding member (300) has a surrounding member notch (310) into which the jig (400) is inserted and thereby an operation to release a lock of the closed bonnet (70) is performed.

By means of this, since the surrounding member (300) has a surrounding member notch (310) an operation to release a lock of the closed bonnet (70) can be more readily performed.

The 6^{th} aspect of the present invention is the tractor according to any one of the 1^{st} to 5^{th} aspects of the present invention, wherein
the one end part (200a) of the bonnet lock releasing operation rod (200), and the another end part (200b) of the bonnet lock releasing operation rod (200) are plate-shaped end parts.

By means of this, since the one end part (200a) of the bonnet lock releasing operation rod (200), and the another end part (200b) of the bonnet lock releasing operation rod (200) are plate-shaped end parts, convenience can be improved.

The 7^{th} aspect of the present invention is the tractor according to the 2^{nd} aspect of the present invention, wherein
the plate (61) is a baseplate (61) arranged at a lower side of a front part of the engine room (60).

By the present invention, a tractor for which danger accompanying an unintentional opening of the bonnet is able to be reduced can be furnished,

### BRIEF DESCRIPTION OF THE DRAWINGS

FIG. 1 is a right side view of the agricultural tractor of the embodiment in the present invention;
FIG. 2 is a perspective view of the driving unit of the agricultural tractor of the embodiment in the present invention;
FIG. 3 is a left side view of the neighborhood of the engine of the agricultural tractor of the embodiment in the present invention;
FIG. 4 is an exploded perspective view of the bonnet fixer and the bonnet lock releasing operation rod of the agricultural tractor of the embodiment in the present invention;
FIG. 5 is a perspective view of the neighborhood of the bonnet of the agricultural tractor of the embodiment in the present invention:
FIG. 6 is an enlarged perspective view of the neighborhood of the bonnet of the agricultural tractor of the embodiment in the present invention;
FIG. 7A is a top view of the rod collar member of the agricultural tractor of the embodiment in the present invention,
FIG. 7B is a front view of the rod collar member of the agricultural tractor of the embodiment in the present invention, and
FIG. 7C is a right side view of the rod collar member of the agricultural tractor of the embodiment in the present invention;
FIG. 8A is a partial front view of the bonnet lock releasing operation rod of the agricultural tractor of the embodiment of the variant example (No. 1) in the present invention, and
FIG. 8B is a partial right side view of the bonnet lock releasing operation rod of the agricultural tractor of the embodiment of the variant example (No. 1) in the present invention;
FIG. 9A is a partial front view of the bonnet lock releasing operation rod of the agricultural tractor of the embodiment of the variant example (No. 2) in the present invention, and
FIG. 9B is a partial right side view of the bonnet lock releasing operation rod of the agricultural tractor of the embodiment of the variant example (No. 2) in the present invention;
FIG. 10 is a top view of the jig of the agricultural tractor of the embodiment of the variant example (No. 3) in the present invention;
FIG. 11 is a perspective view of the rear part of the vehicle-body of the agricultural tractor of the embodiment of the variant example (No. 3) in the present invention;
FIG. 12 is an enlarged perspective view of the neighborhood of the bonnet of the agricultural tractor of the embodiment of the variant example (No. 4) in the present invention;
FIG. 13 is an enlarged perspective view of the neighborhood of the bonnet of the agricultural tractor of the embodiment of the variant example (No. 5) in the present invention;
FIG. 14 is a partial right side view of the neighborhood of the rod collar member of the agricultural tractor of the embodiment of the variant example (No. 6) in the present invention; and
FIG. 15A is a partial top view of the neighborhood of the bonnet fixer of the agricultural tractor of the embodiment in an invention related to the present invention, and
FIG. 15B is a partial front view of the neighborhood of the bonnet fixer of the agricultural tractor of the embodiment in the invention related to the present invention.

### Description of the Reference Numerals

- 10: vehicle-body
- 20: driving unit
- 21: driving seat
- 22: floor
- 23: steering wheel
- 24: frontward/rearward movement lever
- 25L: left brake pedal
- 25R: right brake pedal
- 26: accelerator pedal
- 27: clutch pedal
- 28: ignition key
- 30: engine
- 31: fuel tank
- 32: muffler
- 33: radiator
- 40L: left front-wheel
- 40R: right front-wheel
- 50L: left rear-wheel
- 50R: right rear-wheel
- 60: engine room
- 61: baseplate
- 62: rod penetrating hole
- 63: front frame
- 64: baseplate attaching member
- 65: jig inserting hole
- 70: bonnet
- 71: bonnet pin
- 80: front loader
- 81: front loader oil-pressure hose
- 90: toolbox
- 91: toolbox attaching bolt inserting hole
- 100: bonnet fixer
- 110: fixer base-part
- 111: fixer base-part protrusion
- 112: arm attaching ring member
- 113: arm energizing spring member
- 114: arm attaching nut
- 120: lock arm
- 121: bonnet pin engaging notch
- 122: fixer base-part protrusion inserting hole
- 123: lock arm protrusion
- 124: rod attaching washer
- 125: rod-retaining hairpin engaging hole
- 126: rod-retaining hairpin
- 127: jig contacting groove
- 200: bonnet lock releasing operation rod
- 210: lock arm protrusion inserting hole
- 220: jig engaging hole
- 230: jig engaging concave-part
- 240: jig engaging notch
- 300: rod collar member
- 310: rod collar member notch
- 400: jig
- 410: jig-holding string
- 420: jig-holding butterfly bolt

### DESCRIPTION OF THE EMBODIMENTS

In the following, referring to the drawings, descriptions are given in detail regarding embodiments in the present invention.

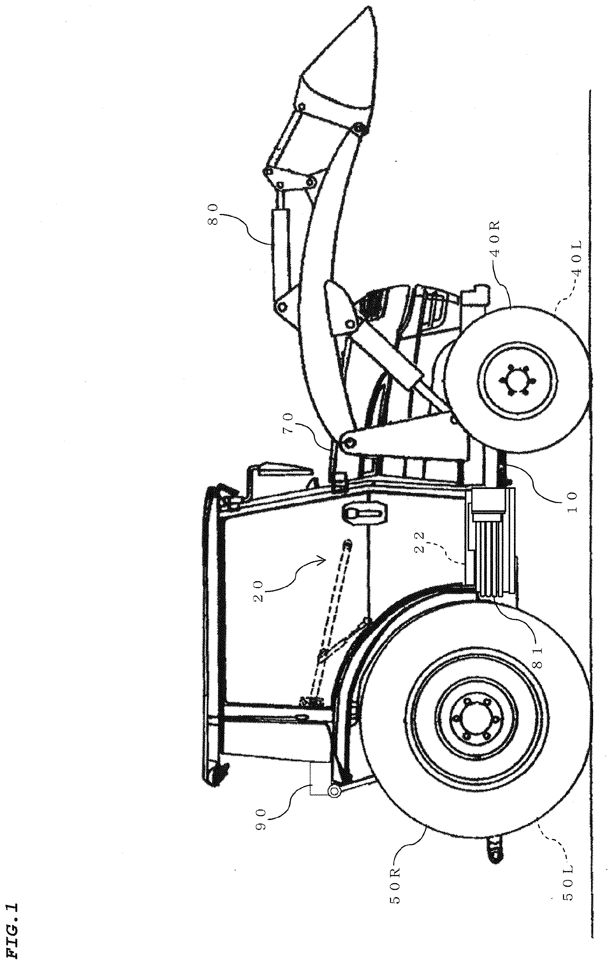

In the beginning, mainly referring to FIGs. 1 to 3, descriptions are specifically given regarding the configuration and action of an agricultural tractor of the present embodiment which is one example of the tractor in the present invention.

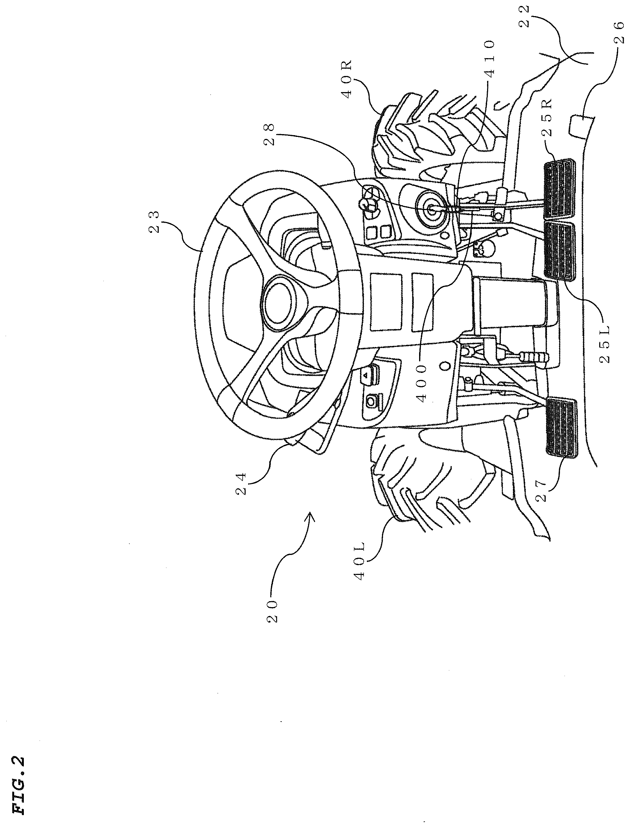

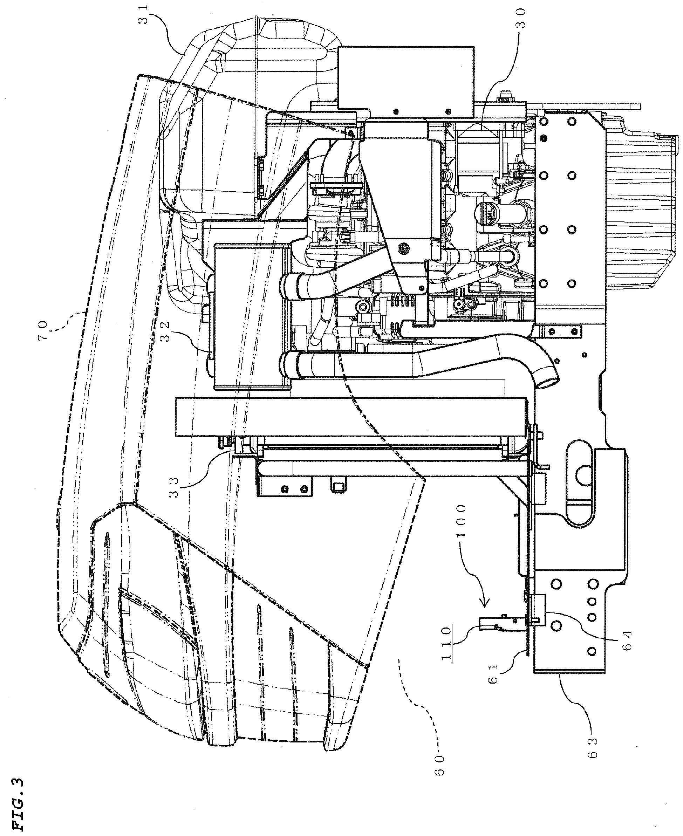

Here, FIG. 1 is a right side view of the agricultural tractor of the embodiment in the present invention, FIG. 2 is a perspective view of a driving unit 20 of the agricultural tractor of the embodiment in the present invention, and FIG. 3 is a left side view of the neighborhood of an engine 30 of the agricultural tractor of the embodiment in the present invention.

In FIG. 3, the state where a worker has finished an operation to release a lock of a closed bonnet 70 with a jig 400 is shown.

What is described in the first place is the fundamental configuration and action of the agricultural tractor of the present embodiment. Hence, regarding the configuration and action and the like which are related to a bonnet fixer 100 and a bonnet lock releasing operation rod 200, descriptions are later given in detail.

In an engine room 60 which is the inside of the bonnet 70 of the front part of a vehicle-body 10, a fuel tank 31, a muffler 32, and a radiator 33 are provided, together with the engine 30 which is made to start up utilizing an ignition key 28 being a main key.

Rotary motive force of the engine 30 is transmitted via an HST (Hydro Static Transmission) to a speed-changing device inside the transmission case provided below a floor 22 of the driving unit 20. And, the rotary motive force with speed-decreasing having been carried out at the speed-changing device is transmitted to a left front-wheel 40L and a right front-wheel 40R, and a left rear-wheel 50L and a right rear-wheel 50R.

In the driving unit 20, a frontward/rearward movement lever 24 is provided. Behind the engine 30, a steering wheel 23 is provided. Behind the steering wheel 23, a driving seat 21 is provided. The hose cover covers hoses which are joined to the steering wheel 23. On the floor 22 at the left side of the operation column cover, a clutch pedal 27 is arranged. On the floor 22 at the right side of the operation column cover, a left brake pedal 25L and a right brake pedal 25R, and an accelerator pedal 26 are arranged.

In the front part of the vehicle-body 10, a front loader 80 to which front loader oil-pressure hoses 81 are joined is installed.

In the rear part of the vehicle-body 10, a toolbox 90 is installed.

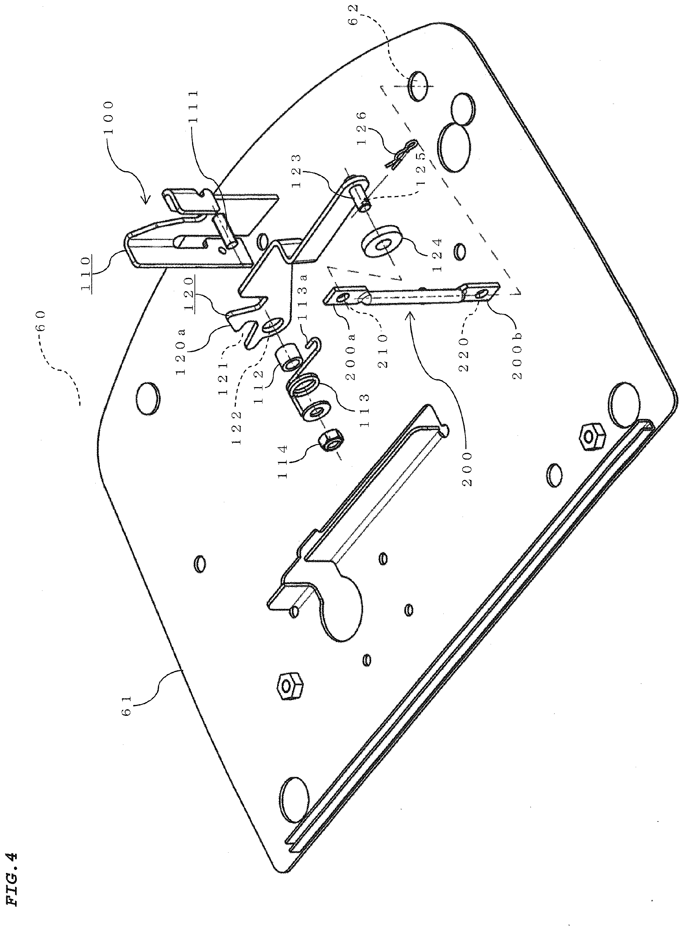

Next, mainly referring to FIGs. 4 to 6, descriptions are more specifically given regarding the configuration and action of the agricultural tractor of the present embodiment.

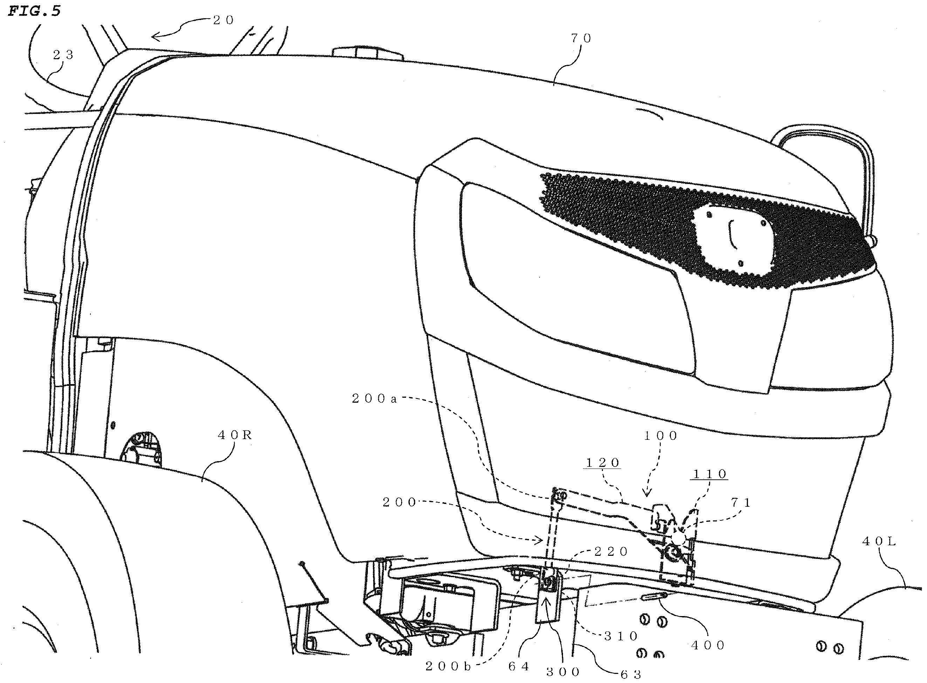

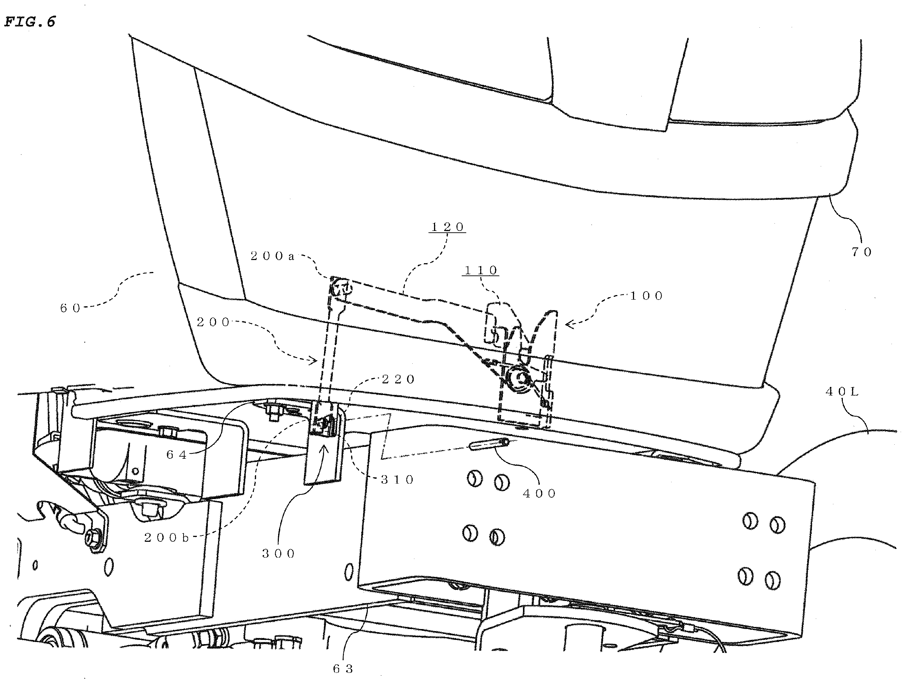

Here, FIG. 4 is an exploded perspective view of the bonnet fixer 100 and the bonnet lock releasing operation rod 200 of the agricultural tractor of the embodiment in the present invention, FIG. 5 is a perspective view of the neighborhood of the bonnet 70 of the agricultural tractor of the embodiment in the present invention, and FIG. 6 is an enlarged perspective view of the neighborhood of the bonnet 70 of the agricultural tractor of the embodiment in the present invention.

In FIG. 6, for facilitating understanding, a bonnet pin 71 is not shown.

The bonnet 70 is an openable-and-closable bonnet, which covers the engine room 60.

The bonnet fixer 100 is a fixer provided in the engine room 60, which has a rotatable lock arm 120 for locking the closed bonnet 70.

The bonnet lock releasing operation rod 200 is a rod for performing an operation to release a lock of the closed bonnet 70, one end part 200a of which is connected with the lock arm 120, and another end part 200b of which protrudes out of the engine room 60.

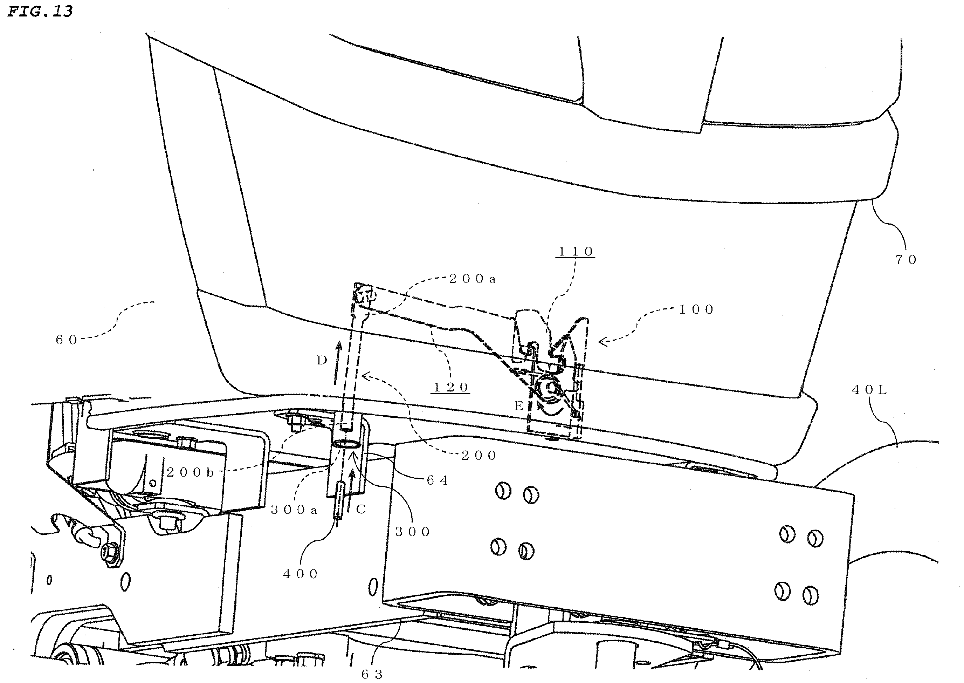

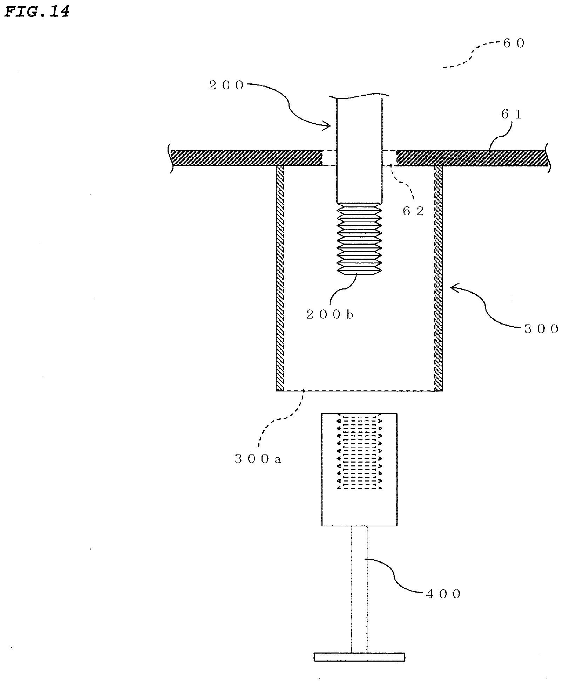

A rod collar member 300 is a member which partly (refer to FIGs. 5, 6 and 12) or wholly (refer to FIGs. 13 and 14) surrounds the another end part 200b of the bonnet lock releasing operation rod 200.

The rod collar member 300 is one example of the surrounding member in the present invention.

Since the pipe-shaped rod collar member 300 partly or wholly surrounds the another end part 200b of the bonnet lock releasing operation rod 200, a worker almost never unintentionally touches the another end part 200b, and a child or the like also almost never unintentionally touches the another end part 200b. Hence, danger accompanying an unintentional opening of the bonnet 70 can be reduced, and safety is improved.

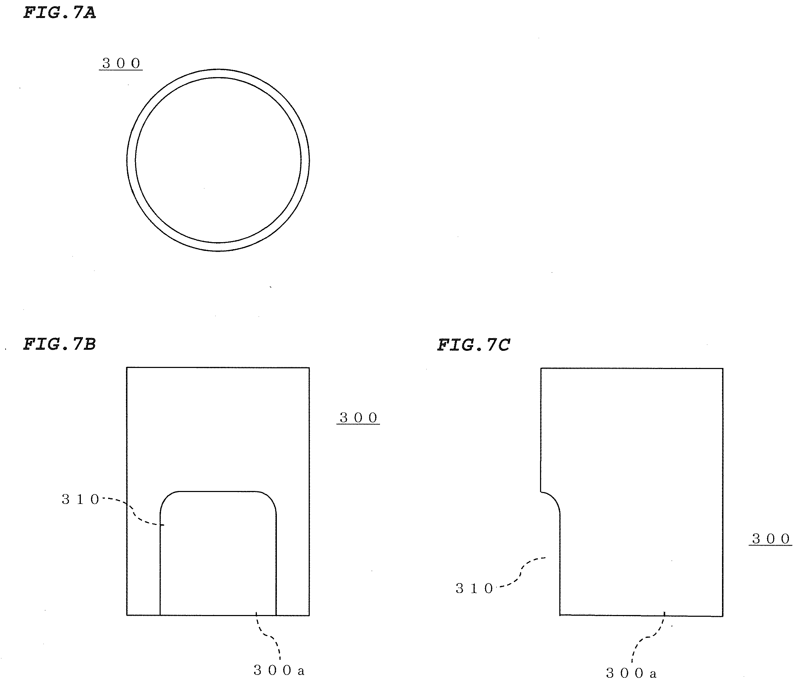

As is shown in FIGs. 7A to 7C, the rod collar member 300 is a cylinder-shaped member.

Here, FIG. 7A is a top view of the rod collar member 300 of the agricultural tractor of the embodiment in the present invention, FIG. 7B is a front view of the rod collar member 300 of the agricultural tractor of the embodiment in the present invention, and FIG. 7C is a right side view of the rod collar member 300 of the agricultural tractor of the embodiment in the present invention.

The another end part 200b of the bonnet lock releasing operation rod 200 has a jig engaging hole 220, with which engages the jig 400 for performing an operation to release a lock of the closed bonnet 70, and the rod collar member 300 has a rod collar member notch 310 through which, by making the jig 400 engage with the jig engaging hole 220, an operation to release a lock of the closed bonnet 70 is performed.

Like this, the rod collar member 300 may have the rod collar member notch 310 through which an operation to release a lock of the closed bonnet 70 is performed.

The rod collar member notch 310 is one example of the surrounding member notch in the present invention.

Since not only the jig engaging hole 220 but also the rod collar member notch 310 is provided, by making the jig 400 engage with the jig engaging hole 220, an operation to release a lock of the closed bonnet 70 can be readily performed. And, a configuration like this is a configuration that satisfies the homologation being a new European certification regulation, which does not permit a style for which the bonnet 70 can be opened only with a finger without a jig.

Mainly referring to FIG. 4, regarding the configuration and action which is related to the bonnet fixer 100 and the bonnet lock releasing operation rod 200, descriptions are given in more detail as follows.

A baseplate 61 is a battery baseplate attached at the upper side of a front frame 63 with a baseplate attaching member 64.

A fixer base-part 110 is provided standingly from the baseplate 61, and a fixer base-part protrusion 111 is rearwardly provided protrudingly.

With a bonnet pin engaging notch 121 of the lock arm 120, the bonnet pin 71 engages. Hence, the closed bonnet 70 is locked.

Into a fixer base-part protrusion inserting hole 122 of the lock arm 120, the fixer base-part protrusion 111 is inserted via an arm attaching ring member 112. Hence, the lock arm 120 is rotatable around the fixer base-part protrusion 111.

An arm energizing spring member 113 is sandwiched in with the arm attaching ring member 112 and an arm attaching nut 114 to be attached at the fixer base-part protrusion 111. And, with the lock arm 120, a tip-end part 113a of the arm energizing spring member 113 engages. Hence, since the energizing force in such an orientation that a lock of the closed bonnet 70 is not released is always applied to the lock arm 120, the state of the lock arm 120 is usually the horizontality state.

In the one end part 200a of the bonnet lock releasing operation rod 200 which downwardly penetrates a rod penetrating hole 62 of the baseplate 61, a lock arm protrusion inserting hole 210 is provided.

Into the lock arm protrusion inserting hole 210, a lock arm protrusion 123 is inserted via a rod attaching washer 124. And, into a rod-retaining hairpin engaging hole 125 of the lock arm protrusion 123, a rod-retaining hairpin 126 is inserted.

When a worker starts an operation to release a lock of the closed bonnet 70 with the jig 400, then the another end part 200b of the bonnet lock releasing operation rod 200 is pulled down, the lock arm 120 downwardly rotates against the energizing force of the arm energizing spring member 113, and the bonnet pin 71 upwardly slides on the bonnet pin engaging notch 121 to come off the lock arm 120.

When a worker finishes an operation to release a lock of the closed bonnet 70 with the jig 400, then the lock arm 120 which the bonnet pin 71 has come off upwardly rotates by the energizing force of the arm energizing spring member 113, the state of the lock arm 120 returns to the horizontality state, and the another end part 200b of the bonnet lock releasing operation rod 200 is pushed up.

In a head-top part 120a of the lock arm 120, inclining is provided so that, at the time when the bonnet 70 is closed, the bonnet pin 71 downwardly slides to easily fit into the bonnet pin engaging notch 121.

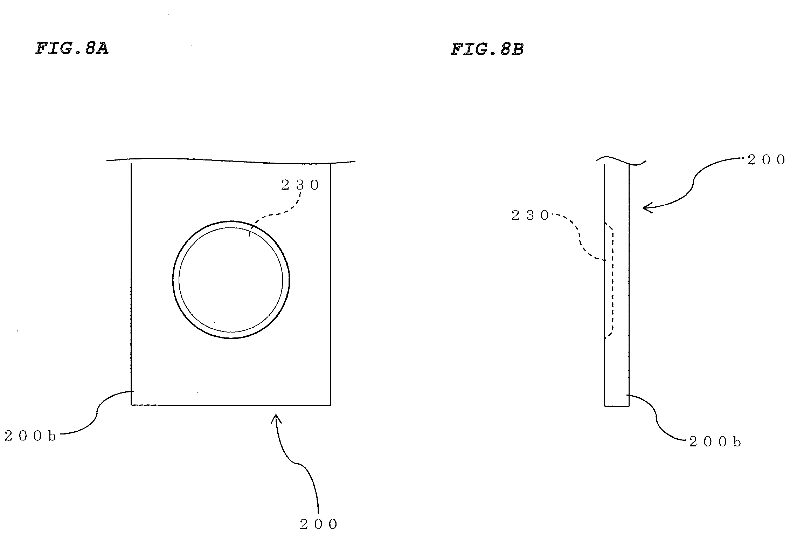

Additionally, as is shown in FIGs. 8A and 8B, an embodiment of a variant example is also conceived, where the another end part 200b of the bonnet lock releasing operation rod 200 has a jig engaging concave-part 230, with which engages the jig 400 for performing an operation to release a lock of the closed bonnet 70, and the rod collar member 300 has the rod collar member notch 310 through which, by making the jig 400 engage with the jig engaging concave-part 230, an operation to release a lock of the closed bonnet 70 is performed.

Here, FIG. 8A is a partial front view of the bonnet lock releasing operation rod 200 of the agricultural tractor of the embodiment of the variant example (No. 1) in the present invention, and FIG. 8B is a partial right side view of the bonnet lock releasing operation rod 200 of the agricultural tractor of the embodiment of the variant example (No. 1) in the present invention.

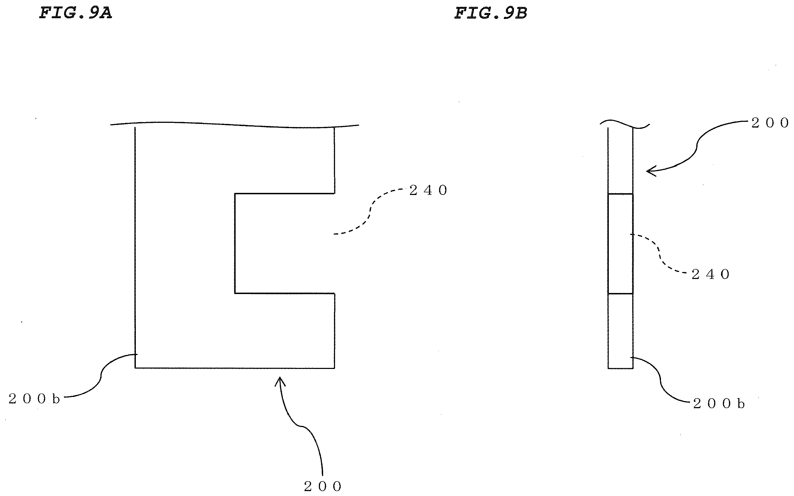

Moreover, as is shown in FIGs. 9A and 9B, an embodiment of a variant example is also conceived, where the another end part 200b of the bonnet lock releasing operation rod 200 has a jig engaging notch 240, with which engages the jig 400 for performing an operation to release a lock of the closed bonnet 70, and the rod collar member 300 has the rod collar member notch 310 through which, by making the jig 400 engage with the jig engaging notch 240, an operation to release a lock of the closed bonnet 70 is performed.

Here, FIG. 9A is a partial front view of the bonnet lock releasing operation rod 200 of the agricultural tractor of the embodiment of the variant example (No. 2) in the present invention, and FIG. 9B is a partial right side view of the bonnet lock releasing operation rod 200 of the agricultural tractor of the embodiment of the variant example (No. 2) in the present invention.

Moreover, an embodiment of a variant example is also conceived, where the jig 400 is the ignition key 28, and the shape of the jig engaging hole 220, the jig engaging concave-part 230, or the jig engaging notch 240 corresponds to the shape of the ignition key 28, so that security can be improved.

Like this, the another end part 200b of the bonnet lock releasing operation rod 200 may have an engaging part, with which engages the jig 400 for performing an operation to release a lock of the closed bonnet 70.

The jig engaging hole 220, the jig engaging concave-part 230, or the jig engaging notch 240 is one example of the engaging part in the present invention.

The one end part 200a of the bonnet lock releasing operation rod 200, and the another end part 200b of the bonnet lock releasing operation rod 200 are plate-shaped end parts.

Since the one end part 200a of the bonnet lock releasing operation rod 200 is a plate-shaped end part, the one end part 200a is connected with the lock arm 120 without wobbling. And, since the another end part 200b of the bonnet lock releasing operation rod 200 is a plate-shaped end part, there is almost no fear that the position of the jig engaging hole 220 is shifted from the position of the rod collar member notch 310 due to position aberration and the like at the time of assembly, and the jig 400 can be readily made to engage with the jig engaging hole 220. Further, since the one end part 200a and the another end part 200b are plate-shaped end parts, the shape of the bonnet lock releasing operation rod 200 is symmetric in the up-and-down direction, and the directionality of the bonnet lock releasing operation rod 200 does not have to be worried about at the time of assembly.

The bonnet lock releasing operation rod 200 penetrates the baseplate 61 arranged at the lower side of the front part of the engine room 60.

Since the bonnet lock releasing operation rod 200 penetrates the baseplate 61, there is almost no fear that rainwater from above and the like infiltrate the engine room 60 from the rod penetrating hole 62. Of course, a sealing member of the rod penetrating hole 62 which prevents infiltration of mud-water from below and the like may be provided at the lower side of the front part of the engine room 60, or a mesh member which prevents infiltration of mud-water from the front and the like may be provided at the front side of the front part of the engine room 60.

In the present embodiment, the jig 400 is an inexpensive stick-shaped jig, which is, at the time of non-use, held at the ignition key 28 with an attachable/detachable jig-holding string 410.

Hence, there is almost no fear that the jig 400 is lost, and standard installation of the jig 400 in a low-end model can be readily performed.

And, since the jig 400 is, at the time of use, inserted into the rod collar member notch 310 provided at the front side face of the rod collar member 300, and made to engage with the jig engaging hole 220, a worker stands at the bonnet opening operation position at the front side of the bonnet 70, while keeping the bonnet 70 with one hand, pulls down the another end part 200b of the bonnet lock releasing operation rod 200 with another hand, and can readily perform an operation to release a lock of the closed bonnet 70.

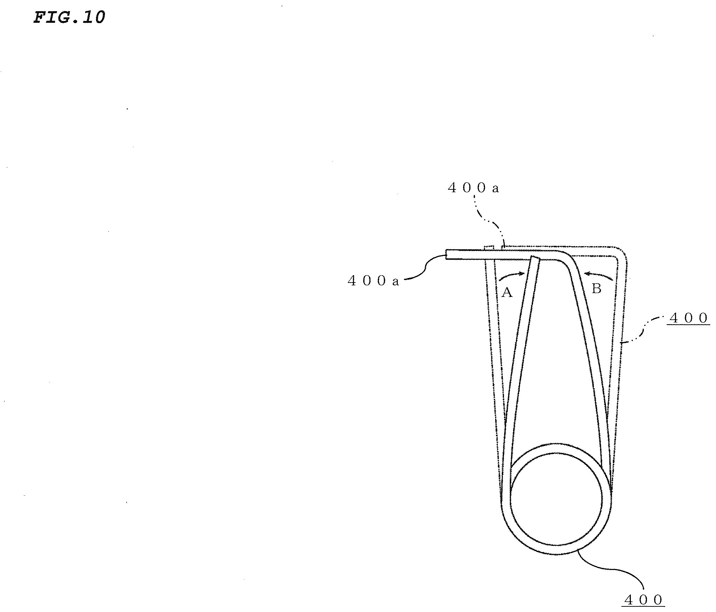

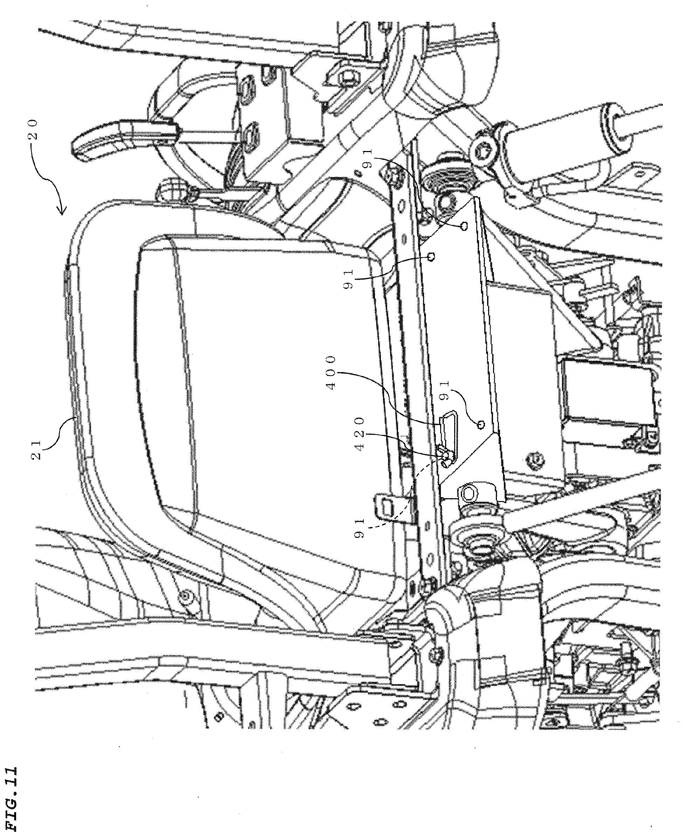

Additionally, as is shown in FIGs. 10 and 11, an embodiment of a variant example is also conceived, where the jig 400 is a safe splinter-removing-tweezers-shaped jig, which is, at the time of non-use, held at a toolbox attaching bolt inserting hole 91 with an attachable/detachable jig-holding butterfly bolt 420.

Here, FIG. 10 is a top view of the jig 400 of the agricultural tractor of the embodiment of the variant example (No. 3) in the present invention, and FIG. 11 is a perspective view of the rear part of the vehicle-body 10 of the agricultural tractor of the embodiment of the variant example (No. 3) in the present invention.

In FIG. 10, the state of the jig 400 at the time of non-use is shown with two-dot chain lines. In FIG. 11, the state where the toolbox 90 is not installed in the rear part of the vehicle-body 10 is shown.

Since the splinter-removing-tweezers-shaped jig 400 is easy to keep with a hand, and a tip-end part 400a of the jig 400 which should engage with the jig engaging hole 220 is, if not being made to protrude against the elastic force in the orientations opposite to the orientations of the arrows A and B, then set back, there is almost no fear that a worker gets injured with the tip-end part 400a. Of course, at the time when the toolbox 90 is installed in the rear part of the vehicle-body 10, since the jig 400 cannot be held at the toolbox attaching bolt inserting hole 91, the jig 400 may be put in the toolbox 90.

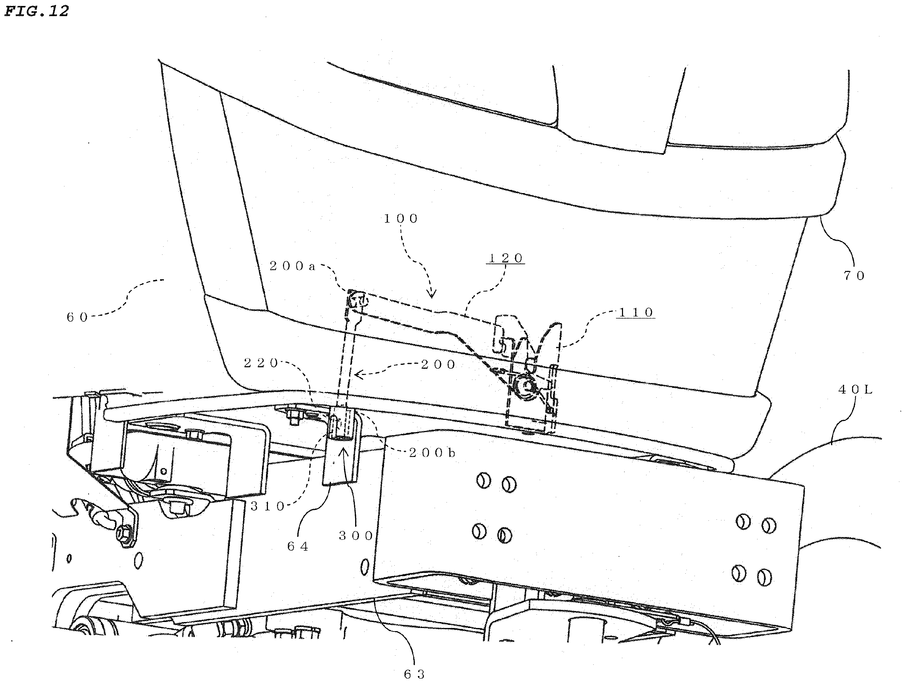

Moreover, as is shown in FIG. 12, an embodiment of a variant example is also conceived, where the jig 400 is, at the time of use, inserted into the rod collar member notch 310 provided at the left or right side face of the rod collar member 300.

Here, FIG. 12 is an enlarged perspective view of the neighborhood of the bonnet 70 of the agricultural tractor of the embodiment of the variant example (No. 4) in the present invention.

In FIG. 12, for facilitating understanding, the bonnet pin 71 is not shown.

Even at the time when the front loader 80 is installed in the front part of the vehicle-body 10, and a worker does not easily stand at the bonnet opening operation position at the front side of the bonnet 70, the worker stands at a position at the left or right side of the bonnet 70, and can readily perform an operation to release a lock of the closed bonnet 70.

Moreover, as is shown in FIG. 13, an embodiment of a variant example is also conceived, where a worker pushes up the another end part 200b of the bonnet lock releasing operation rod 200, and can readily perform an operation to release a lock of the closed bonnet 70.

Here, FIG. 13 is an enlarged perspective view of the neighborhood of the bonnet 70 of the agricultural tractor of the embodiment of the variant example (No. 5) in the present invention.

In FIG. 13, for facilitating understanding, the bonnet pin 71 is not shown.

Since the jig 400 is, at the time of use, inserted in the orientation of the arrow C into an aperture part 300a provided at the lower face of the rod collar member 300, and made to contact the bonnet lock releasing operation rod 200, the another end part 200b of the bonnet lock releasing operation rod 200 is pushed up in the orientation of the arrow D, and the lock arm 120 rotates in the orientation of the arrow E.

Like this, the another end part 200b of the bonnet lock releasing operation rod 200 may have a contacting part, which the jig 400 for performing an operation to release a lock of the closed bonnet 70 contacts.

Moreover, as is shown in FIG. 14, an embodiment of a variant example is also conceived, where the jig 400 is, at the time of use, inserted into the aperture part 300a provided at the lower face of the rod collar member 300, and made to be screwed on the bonnet lock releasing operation rod 200.

Here, FIG. 14 is a partial right side view of the neighborhood of the rod collar member 300 of the agricultural tractor of the embodiment of the variant example (No. 6) in the present invention.

In FIG. 14, for facilitating understanding, cross-sections are shown regarding the rod collar member 300 and the like.

Like this, the rod collar member 300 may be fixed at the lower face of the baseplate 61.

It is desirable that a screw provided at the another end part 200b of the bonnet lock releasing operation rod 200 should be a right-hand screw in a case where a worker is right-handed, and should be a left-hand screw in a case where a worker is left-handed. It is because the orientation for which the jig 400, where the screw hole corresponding to the screw provided at the another end part 200b is provided, is easy to turn with a thumb is the counterclockwise orientation in a case where a worker is right-handed, and is the clockwise orientation in a case where a worker is left-handed. Of course, a configuration for which the another end part 200b is pulled down at the time of use of the jig 400 may be adopted, or a configuration for which the another end part 200b is pushed up at the time of use of the jig 400 may be adopted.

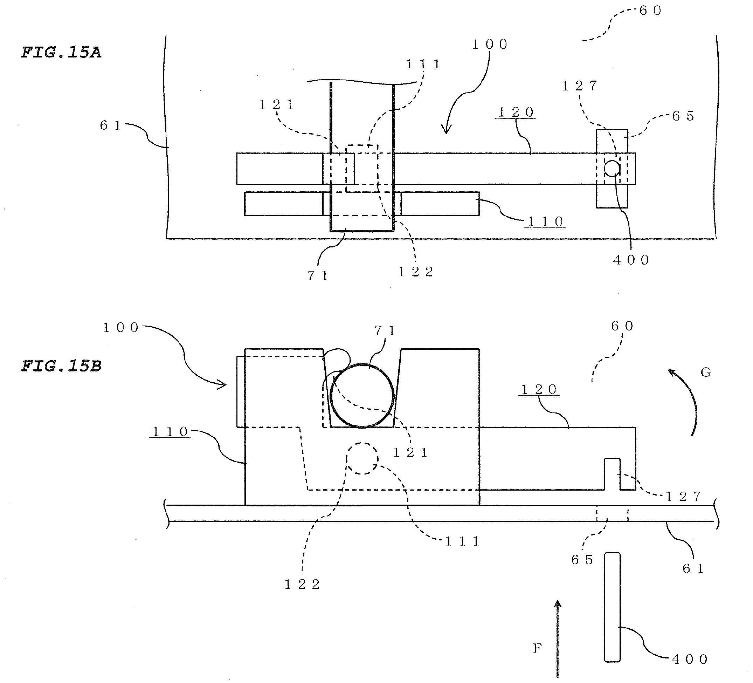

Additionally, as is shown in FIGs. 15A and 15B, an embodiment of a variant example is also conceived, where the bonnet lock releasing operation rod 200 and the rod collar member 300 are absent.

Here, FIG. 15A is a partial top view of the neighborhood of the bonnet fixer 100 of the agricultural tractor of the embodiment in an invention related to the present invention, and FIG. 15B is a partial front view of the neighborhood of the bonnet fixer 100 of the agricultural tractor of the embodiment in the invention related to the present invention.

Since the jig 400 is, at the time of use, inserted in the orientation of the arrow F into a jig inserting hole 65 provided at the baseplate 61, and made to contact a jig contacting groove 127 provided at the lower face of the lock arm 120, the lock arm 120 rotates in the orientation of the arrow G. Of course, for example, if a style for which suppressing of the number of components is requested, or a person except a prescribed worker cannot freely open the bonnet 70 is desirable, then a configuration for which the jig 400 is the ignition key 28, and the shapes of the jig inserting hole 65 and the jig contacting groove 127 correspond to the shape of the ignition key 28 may be adopted.

A tractor in the present invention is such that danger accompanying an unintentional opening of the bonnet can be reduced, and is useful for the purpose of utilizing for a tractor such as an agricultural tractor or the like.

## Claims

1. A tractor, comprising:
an openable-and-closable bonnet (70), which covers an engine room (60); and
a bonnet fixer (100) provided in the engine room (60), which has a rotatable lock arm (120) for locking the closed bonnet (70),
a bonnet lock releasing operation rod (200) for performing an operation to release a lock of the closed bonnet (70), one end part (200a) of which is connected with the lock arm (120), and another end part (200b) of which protrudes out of the engine room (60); and
a surrounding member (300) which partly or wholly surrounds the another end part (200b) of the bonnet lock releasing operation rod (200);
**characterized in that**
the another end part (200b) of the bonnet lock releasing operation rod (200) has an engaging part, with which engages a jig (400) for performing an operation to release a lock of the closed bonnet (70), and
the jig (400) is, at a time of use, inserted into the surrounding member (300), and made to engage with the engaging part.

2. The tractor according to claim 1, wherein
the bonnet fixer (100) is provided standingly from a plate (61),
the bonnet lock releasing operation rod (200) penetrates the plate (61),
the surrounding member (300) is fixed at a lower face of the plate (61), and
when, with the jig (400) which has been inserted into the surrounding member (300) and made to engage with the engaging part, a worker starts an operation to release a lock of the closed bonnet (70), then the another end part (200b) of the bonnet lock releasing operation rod (200) is pulled down,

3. The tractor according to claim 1 or 2, wherein
the engaging part is a jig engaging hole (220), a jig engaging concave-part (230), or a jig engaging notch (240).

4. The tractor according to any one of claims 1 to 3, wherein
the another end part (200b) of the bonnet lock releasing operation rod (200) has a contacting part, which a jig (400) for performing an operation to release a lock of the closed bonnet (70) contacts.

5. The tractor according to any one of claims 1 to 4, wherein
the surrounding member (300) has a surrounding member notch (310) into which the jig (400) is inserted and thereby an operation to release a lock of the closed bonnet (70) is performed.

6. The tractor according to any one of claims 1 to 5, wherein
the one end part (200a) of the bonnet lock releasing operation rod (200), and the another end part (200b) of the bonnet lock releasing operation rod (200) are plate-shaped end parts.

7. The tractor according claim 2, wherein
the plate (61) is a baseplate (61) arranged at a lower side of a front part of the engine room (60).

## Patentansprüche

1. Traktor, umfassend;
eine zu öffnende und zu verschließende Haube (70), die einen Motorraum (60) abdeckt; und
eine Haubenfixierungsvorrichtung (100), die im Motorraum (60) bereitgestellt ist, die einen drehbaren Verriegelungsarm (120) zum Verriegeln der geschlossenen Haube (70) aufweist,
eine Betätigungsstange (200) zur Freigabe der Haubenverriegelung, um eine Betätigung zur Freigabe einer Verriegelung der geschlossenen Haube (70) durchzuführen, wobei ein Endteil (200a) mit dem Verriegelungsarm (120) verbunden ist, und wobei ein weiterer Endteil (200b) aus dem Motorraum (60) vorspringt; und
ein Umgebungselement (300), das teilweise oder vollständig den weiteren Endteil (200b) der Betätigungsstange zur Freigabe der Haubenverriegelung (200) umgibt,
**dadurch gekennzeichnet, dass**
der weitere Endteil (200b) der Betätigungsstange zur Freigabe der Haubenverriegelung (200) einen Eingriffsteil aufweist, mit dem eine Montagevorrichtung (400) eingreift, um eine Betätigung zur Freigabe einer Verriegelung der geschlossenen Haube (70) durchzuführen,
die Montagevorrichtung (400) zum Zeitpunkt der Verwendung in das Umgebungselement (300) eingeführt ist und dazu veranlasst wird, mit dem Eingriffsteil einzugreifen.

2. Traktor nach Anspruch 1, wobei
die Haubenfixierungsvorrichtung (100) aufrecht von einer Platte (61) bereitgestellt ist,
die Betätigungsstange zur Freigabe der Haubenverriegelung (200) in die Platte (61) eindringt,
das Umgebungselement (300) auf einer unteren Seite der Platte (61) fixiert ist, und
wenn, mit der Montagevorrichtung (400), die in das Umgebungselement (300) eingeführt wurde und dazu veranlasst wurde, mit dem Eingriffsteil einzugreifen, ein Bediener eine Betätigung startet, um eine Verriegelung der geschlossenen Haube (70) freizugeben, dann wird der andere Endteil (200b) der Betätigungsstange zur Freigabe der Haubenverriegelung (200) nach unten gezogen.

3. Traktor nach Anspruch 1 oder 2, wobei
der Eingriffsteil ein Montagevorrichtungs-Eingriffsloch (220), ein konkaver Teil des Montagevorrichtungseingriffs (230) oder eine Montagevorrichtungs-Eingriffskerbe (240) ist.

4. Traktor nach einem der Ansprüche 1 bis 3, wobei
der weitere Endteil (200b) der Betätigungsstange zur Freigabe der Haubenverriegelung (200) einen Kontaktteil aufweist, mit dem eine Montagevorrichtung (400) zur Durchführung einer Betätigung zur Freigabe einer Verrieglung der geschlossenen Haube (70) in Kontakt kommt.

5. Traktor nach einem der Ansprüche 1 bis 4, wobei das Umgebungselement (300) eine Umgebungselementkerbe (310) aufweist, in die die Montagevorrichtung (400) eingeführt wird, und wodurch eine Betätigung zur Freigabe eine Verriegelung der geschlossenen Haube (70) durchgeführt wird.

6. Traktor nach einem der Ansprüche 1 bis 5, wobei
der eine Endteil (200a) der Betätigungsstange zur Freigabe der Haubenverriegelung (200) und der weitere Endteil (200b) der Betätigungsstange zur Freigabe der Haubenverriegelung (200) plattenförmige Endteile sind.

7. Traktor nach Anspruch 2, wobei
die Platte (61) eine Basisplatte (61) ist, die an einer unteren Seite eines vorderen Teils des Motorraums (60) angeordnet ist.

## Revendications

1. Tracteur comprenant :
un capot pouvant s'ouvrir et se fermer (70), qui recouvre un compartiment moteur (60) ; et
un dispositif de fixation de capot (100) prévu dans le compartiment moteur (60), qui a un bras de verrouillage rotatif (120) pour verrouiller le capot (70) fermé,
une tige d'actionnement de déverrouillage de capot (200) pour réaliser une opération afin de déverrouiller le capot (70) fermé, dont une partie d'extrémité (200a) est raccordée au bras de verrouillage (120), et dont une autre partie d'extrémité (200b) fait saillie du compartiment moteur (60) ; et
un élément périphérique (300) qui entoure partiellement ou complètement l'autre partie d'extrémité (200b) de la tige d'actionnement de déverrouillage de capot (200) ;
**caractérisé en ce que** :
l'autre partie d'extrémité (200b) de la tige d'actionnement de déverrouillage de capot (200) a une partie de mise en prise, avec laquelle se met en prise un gabarit (400) pour réaliser une opération de déverrouillage du capot (70) fermé, et
le gabarit (400) est, au moment de l'utilisation, inséré dans l'élément périphérique (300) et est fait pour se mettre en prise avec la partie de mise en prise.

2. Tracteur selon la revendication 1, dans lequel :
le dispositif de fixation de capot (100) est prévu droit à partir d'une plaque (61),
la tige d'actionnement de déverrouillage de capot (200) pénètre dans la plaque (61),
l'élément périphérique (300) est fixé au niveau d'une face inférieure de la plaque (61), et
lorsque, avec le gabarit (400) qui a été inséré dans l'élément périphérique (300) et qui est fait pour se mettre en prise avec la partie de mise en prise, un opérateur commence une opération pour déverrouiller le capot (70) fermé, alors l'autre partie d'extrémité (200b) de la tige d'actionnement de déverrouillage de capot (200) est baissée.

3. Tracteur selon la revendication 1 ou 2, dans lequel :
la partie de mise en prise est un trou de mise en prise de gabarit (220), une partie concave de mise en prise de gabarit (230) ou une encoche de mise en prise de gabarit (240).

4. Tracteur selon l'une quelconque des revendications 1 à 3, dans lequel :
l'autre partie d'extrémité (200b) de la tige d'actionnement de déverrouillage de capot (200) a une partie de contact, avec laquelle un gabarit (400) prévu pour réaliser une opération afin de déverrouiller le capot (70) fermé, est en contact.

5. Tracteur selon l'une quelconque des revendications 1 à 4, dans lequel :
l'élément périphérique (300) a une encoche d'élément périphérique (310) dans laquelle le gabarit (400) est inséré et ainsi une opération pour déverrouiller le capot (70) fermé est réalisée.

6. Tracteur selon l'une quelconque des revendications 1 à 5, dans lequel :
la une partie d'extrémité (200a) de la tige d'actionnement de déverrouillage de capot (200) et l'autre partie d'extrémité (200b) de la tige d'actionnement de déverrouillage de capot (200) sont des parties d'extrémité en forme de plaque.

7. Tracteur selon la revendication 2, dans lequel :
la plaque (61) est une plaque de base (61) agencée au niveau d'un côté inférieur d'une partie avant d'un compartiment moteur (60) .
